# FASCICULE DE BREVET EUROPEEN

(11) **EP 0 589 856 B1**
(45) Date de publication et mention de la délivrance du brevet: **28.05.1997**
(21) Numéro de dépôt: 93830381.5
(22) Date de dépôt: 14.09.1993
(51) Int. Cl.: F16K 27/04

(54) **Corps composite pour robinets**
Zusammengesetztes Gehäuse für Sanitärventile
Composed valve housing for faucets

(30) Priorité: 24.09.1992 IT BS920112
(43) Date de publication de la demande: 30.03.1994
(73) Titulaire: SOLID PLAST S.R.L., I-25013 Carpenedolo (Brescia) (IT)
(72) Inventeur: Orlandi, Alessio, I-46043 Castiglione d/Stiviere (Mantova) (IT)
(74) Mandataire: Manzoni, Alessandro

(56) Documents cités:
- DE-A- 1 550 060
- DE-A- 3 531 935
- DE-U- 8 507 823
- DE-U- 8 807 606

## Description

Cette invention se réfère en général aux robinets pour installations de plomberie sanitaire incorporantes comme dispositif de réglage de l'eau de distribution, une soupape mélangeuse ou tête d'interception. Il s'agit plus précisément d'une invention pour les corps de robinets de lavabos, éviers, bidets et autres du même genre, ainsi que tous ceux pour baignoires.

On n'utilise, dans les formes d'exécution les plus traditionnelles pour le corps de ces robinets ou groupes de robinets, que du matériel métallique, de fusion, en général du laiton, usiné et finissé extérieurement, qui permettent d'obtenir des produits manufacturés dans les formes classiques.

On connaît également bien les corps de robinets travaillés avec une barre ou étiré métallique qui ne peuvent pourtant pas prendre de formes classiques. Il a été également proposé de réaliser des corps de robinets en résine synthétique avec des techniques de moulage à injection, qui cependant présentent des limites et divers problèmes quant aux formes, aux retrécissements, aux déformations et surtout à la résistance mécanique quand le corps doit participer au montage du robinet et est sollicité pendant l'emploi.

L'état de la technique connu du document DE-A-1 550 060 concerne un corps composite pour robinet tel que décrit par les caractéristiques du préambule de la revendication 1. L'enveloppe de ce corps ne concerne cependant que la partie centrale du robinet et le bec terminal de distribution n'est pas couvert par l'enveloppe.

Cette invention-ci vise plutôt à lever ces limitations et à résoudre les problèmes créés, grâce à des perfectionnements des corps de robinets ou groupes de robinets avec au moins une partie en résine synthétique.

C'est donc le but de cette invention de fournir un corps de robinets avec un noyau en métal et une enveloppe ou coque en résine synthétique; cette dernière structurée pour un assemblage pratique, rapide et sûr, non sujet à une contrainte mécanique et ne faisant fonction que de chemise et d'habillage extérieur du robinet offrant un profil variable et désiré.

Un but particulier de cette invention est de fournir un corps composite pour robinets dans lequel les conduits pour l'eau et la soupape d'interception sont exclusivement prévus dans le noyau métallique pour éviter ainsi à l'enveloppe de résine des fonctions de canalisation et d'étanchéité.

Le corps de robinets ou groupes de robinets de cette invention est conforme à la revendication 1. L'avantage est que l'enveloppe extérieure en résine et non métallique, se limitera à la seule fonction d'"habiller" le noyau en métal donnant ainsi au robinet sa forme définitive et globale sans devoir recourir à d'autres travaux. L'enveloppe pourra être d'ailleurs de n'importe quelle couleur en choisissant au départ la pigmentation désirée de la résine.

Les dessins ci-joints montrent à titre indicatif et non limitatif un exemple de réalisation pratique de l'invention et plus précisément

La Fig. 1 montre une vue explosée et en coupe des éléments séparés destinés à former un robinet mélangeur d'eau froide et d'eau chaude.

La Fig. 2 montre en coupe axiale, les éléments de la Fig. 1 assemblés en robinet.

La Fig. 3 montre un détail en coupe.

Le corps de robinets qui est ici présenté est globalement indiqué par 10, et est constitué par un noyau 11 et par une enveloppe ou coque 12 qui renferme et habille le noyau de manière complémentaire.

Ce noyau est formé d'un élément 13, généralement en laiton, ayant au moins un conduit d'entrée 13a, un conduit de sortie 13b de l'eau et un siège 13c pour une soupape 14, et d'un petit tuyau 15, lui-aussi en laiton ou autre matériel, qui amène l'eau à un bec de distribution terminal 16.

Pour un robinet mélangeur monocommande pour eau chaude et froide, comme illustré par les dessins, l'élément 13 du noyau en métal 11 a deux conduits d'entrés 13a respectivement pour l'eau chaude et l'eau froide qui doivent être individuellement reliés à la canalisation correspondante d'apport et à un conduit de sortie 13b auquel se relié le petit tuyau 15 de refoulement de l'eau par le bec de distribution 16. La soupape 14 peut être une soupape mélangeuse de type à cartouche - déjà connue - qui se place et se fixe au moyen d'un embout 17 dans le siège 13c défini par l'élément 13, et qui est commandé par une poignée 18. Le petit tuyau 15, est d'un côté introduit par pression, et maintenu grâce à un joint 15a placé dans le trou de sortie 13b; de l'autre côté, il s'accouple grâce là-aussi, à un joint 15b avec le bec de distribution 16.

De son côté, l'enveloppe ou coque 12, généralement en résine, a une partie 12a qui sert à renfermer l'élément 13 du noyau 11, et une partie latérale tubulaire 12b qui sert à renfermer le petit tuyau 15 et à accueillir le bec de distribution 16.

Ce bec 16 présente un prolongement 16a qui s'introduit, sans aucune rotation, dans la partie tubulaire 12b de l'enveloppe 12. Ce prolongement 16a se termine par une languette 16b munie d'une dent d'accrochage 16c qui s'engage avec un support prévu à l'intérieur de l'enveloppe ou coque 12. Ce prolongement contient également un joint latéral 16e d'étanchéité entre le prolongement lui-même et la partie tubulaire 12b dans laquelle il a été introduit.

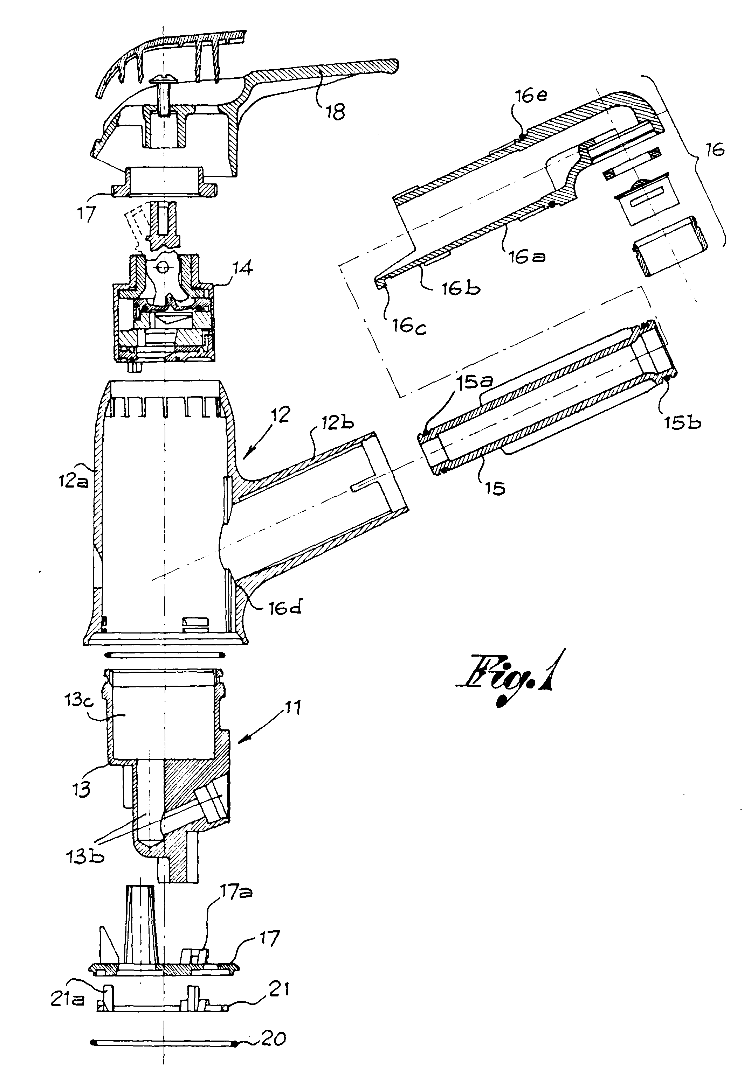

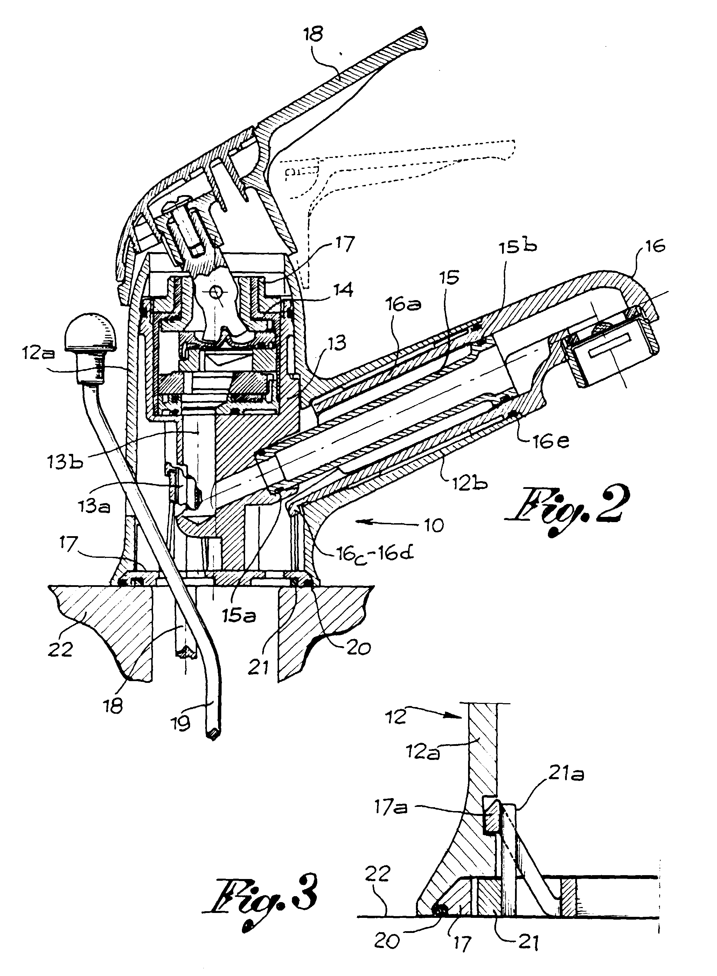

L'assemblage d'un tel robinet peut se faire en commençant par l'élément 13 du noyau 11 dans la partie 12a de l'enveloppe ou coque 12, en introduisant ensuite le petit tuyau 15 avec son joint respectif 15a placé dans le trou de sortie 13b le faisant passer dans la partie tubulaire de l'enveloppe 12, et en fixant enfin le bec de distribution 16 à la partie tubulaire 12b grâce à la languette 16a avec dent d'accrochage 16c. Le prolongement 16a du bec de distribution 16 se trouvera alors entre ladite partie tubulaire 12b et le petit tuyau 15, entourant ce dernier, de manière complètement étanche grâce aux joints 15a et 16e - voir Fig. 2 -.

Afin de retenir le noyau à l'intérieur de l'enveloppe 12, on applique à la base de cette dernière un disque 17 sur lequel s'appuie le noyau, ce disque ayant des trous de passage pour les tuyaux de refoulement de l'eau qu'il faut relier au groupe de soupapes 14, avec au moins un tirant 18 pour la mise en place du robinet et d'une éventuelle tige 19 pour commander un bouchon sauteur.

Ce disque est muni, pour en faciliter la mise en place, de languettes à dents 17a qui fonctionnent par déclic en fente, à l'intérieur de l'enveloppe 12. On applique également avec ce disque un joint d'étanchéité 20 et une bague d'arrêt 21 ayant des ailettes 21a qui passent à travers le disque et se placent devant les languettes à dents 17 afin de les bloquer pour empêcher d'éventuels dégagements au niveau des fentes de l'enveloppe.

Une fois les divers éléments ainsi assemblés, on pourra monter et bloquer la soupape 14 dans le siège 13c de l'élément 13, et fixer en place le robinet sur l'appareillage 22 intéressé à l'aide des tirants 18 qui se fixent au noyau. Des éléments analogues, même s'ils se présentent sous différentes configurations, avec la même technique d'assemblage peuvent être utilisés pour la construction de groupes de robinets pour baignoires.

## Revendications

1. Corps composite pour robinets de plomberie sanitaire possédant une soupape de contrôle de la distribution de l'eau, le corps **étant** constitué par un noyau (11) portant la soupape et délimitant les conduits pour l'entrée et la sortie de l'eau, et d'une enveloppe ou coque (12) raccordée au noyau, le noyau possédant des moyens pour la mise en place du robinet une fois assemblé, le noyau (11) présentant un élément (13) ayant au moins un conduit (13a) d'entrée de l'eau, un conduit de sortie (13b) de l'eau et un siège (13c) pour la soupape (14), et un petit tuyau (15) qui s'accouple de façon étanche avec le susdit conduit de sortie (13b) et avec le bec terminal (16) de distribution de l'eau; l'enveloppe ou coque (12) présentant une **première** partie (12a) qui renferme le dit élément (13) du noyau,
caractérisé
en ce que les moyens de mise en place du robinet sont constitués de tirants (18);
en ce que l'enveloppe ou coque (12) présente une **deuxième** partie (12b) qui renferme le dit petit tuyau (15) et qui porte le bec terminal de distribution (16),
et en ce qu'à la base de l'enveloppe ou coque (12) se trouve **rapporté** et fixé un disque (17) qui retient le noyau (11) à l'intérieur de la dite enveloppe ou coque (12), ce disque (17) étant traversé par les tirants (18) de mise en place et par les conduits d'apport de l'eau.

2. Corps composite pour robinets selon la revendication 1, **caractérisé en ce** ledit bec terminal de distribution (16) **présente** un prolongement (16a) destiné à s'insérer sans rotation, dans la **deuxième** partie tubulaire (12b) de l'enveloppe ou coque (12) et à entourer le dit petit tuyau (15), **en ce que** ledit prolongement (16a) se termine par une languette (16b) munie d'un dent d'accrochage (16c) **coopérant** avec un support (16d) **prévu** à l'intérieur de l'enveloppe ou coque, **en ce qu'**est prévu entre le dit prolongement (16a) et la dite **deuxième** partie tubulaire (12b) au moins un joint d'étanchéité (16e), et **en ce qu'**il est également prévu au moins un joint d'étanchéité (15b) entre le dit petit tuyau (15) et le dit prolongement (16a) du bec de distribution (16).

3. Corps composite pour robinets selon la revendication 2, **caractérisé en ce que** le dit disque de base (17) **comporte** des languettes à dents (17a) **venant s'engager par** déclic en fente **dans la surface** intérieure de l'enveloppe ou coque (12) à une **hauteur** inférieure par rapport **au niveau de localisation** du petit tuyau (15), **en ce qu'**est prévue une bague d'arrêt (21) **munie** d'ailettes (21a) qui passent à travers le disque (17) pour venir se placer **contre** les languettes à dents (17a) **de manière à bloquer celles-ci contre la surface intérieure de l'enveloppe ou coque (12),** et **en ce qu'**au moins un joint d'étanchéité (26) **est prévu entre ledit disque de base (17)** et l'appareillage choisi pour monter le robinet.

## Patentansprüche

1. Zusammengesetzter Körper für Wasserabgabevorrichtungen, insbesondere für den Sanitärbereich, welche ein Steuerventil für die Wasserversorgung enthält. Der Körper besteht aus einem Gehäuse (11) mit einem Ventil, das die Leitungen für den Wasserzu- und Wasserabfluß steuert, und aus Hülle oder Schale (12), die mit dem Gehäuse verbunden ist. Das Gehäuse ist mit den notwendigen Maßnahmen für das Positionieren des bereits zusammengesetzten Wasserabgabevorrichtung versehen. Außerdem besitzt das Gehäuse (11) ein Element (13), das zumindest aus einer Wasserzuflußleitung (13a), aus einer Wasserabflußleitung (13b), einem Gehäusesitz für das Vcntil (14) und einer kleinen Röhre (15) besteht, die hermetisch mit der Wasserabflußleitung (13b) und der Endtülle (16) verbunden ist. Die Hülle oder Schale (12) hat einen ersten Teil (12a), welcher das Gehäuseelement (13) festhält. Das Gehäuse weist die folgenden Merkmale auf:
- Die Maßnahme für den Einbau der Wasserabgabevorrichtung bestehen aus Zugstangen (18).
- Die Hülle oder Schale (12) hat einen zweiten Teil (12b), welcher die obengenannte kleine Röhre (15) festhält und die Endtülle (16) trägt.
- An der Basis der Hülle oder Schale (12) befindet sich eine Scheibe (17), die das Gehäuse (11) innerhalb der Hülle oder Schale (12) festhält und durch welche die Zugstangen (18) und die Wasserabflußleitung führen.

2. Zusammengesetzter Körper für Wasserabgabevorrichtungen gemäß Patentanspruch 1. Der Körper weist die folgenden Merkmale auf:
- Die Endtülle (16) hat eine Verlängerung (16a), die ohne Rotation in den zweiten Flachteil (12b) der Hülle oder Schale (12) eingefügt wird und die obengenannte kleine Röhre (15) umfaßt.
- Die Verlängerung (16a) endet mit einer Feder (16b), welche mit einem Verbindungszahn (16c) und einem Halter (16d) innerhalb der Hülle oder Schale (12) versehen ist.
- Die Verlängerung (16a) und der obengenannte zweite Flachteil (12b) sind mindestens mit einer Dichtleiste (16e) und, falls vorgesehen, mindestens mit einer Dichtleiste (15b) innerhalb der kleinen Röhre (15) und der Verlängerung (16a) der Endtülle versehen.

3. Zusammengesetzter Körper für Wasserabgabevorrichtungen gemäß Patentanspruch 2. Der Körper weist die folgenden Merkmale auf:
- Die Basisscheibe (17) ist mit Zahnschnappfedern (17a) versehen, die in die Hülle oder Schale (12) eingefügt werden. Die Federn müssen auf eine Höhe eingesetzt werden, die geringer als die Höhe des Einsetzpunktes der kleinen Röhre (15) ist.
- Unterhalb der Basisscheibe (17) ist ein Haltering (21) angebracht, dessen Rippen (21a) durch die Scheibe bis zu den Zahnschnappfedern (17a) reichen und diese an der Hüllen- oder Schaleninnenseite (12) festhalten.
- Die Basisscheibe (17) und die für den Einbau der Wasserabgabevorrichtung ausgewählten Maßnahme müssen mindestens über eine Dichtleiste (26) verfügen.

## Claims

1. Compound device for hygienic pipes with valve for water distribution control. The body consists of a body (11) with the valve on top regulating the inflow and outflow of water from the pipes and of a cover or coating (12) around the body. The body is supplied with devices needed to fix the assembled tap in proper position. The body (11) is providcd with an element (13) consisting of at Icast one water-inlet pipe (13a), one water-outlet pipe (13b) and one casing seat (13c) for the valve (14), as well as one small pipe (15) hermetically connected to the water-outlet pipe (13b) by a final spout (16) for water distribution. The cover or coating has a first part (12a) holding the aforesaid element (13) of the body, characterized in that:
- The devices for the positioning of the tap consist of pullrods (18).
- The cover or coating (12) has a second part (12b) holding the aforesaid small pipe (15) and the final water distribution spout (16).
- A disk (17) is fixed at the basis of the cover or coating (12). The disk holds the body (11) firm within the cover or coating (12), and the positioning pullrods (18) as well as the water pipes pass through it.

2. Compound device for taps according to claim 1. characterized in that:
- The final water distribution spout (16) has an extension (16a) to be inserted without rotating into the second tubular part (12b) of the cover or coating (12) and designed to cover the small pipe (15).
- The extension (16a) ends with a tang (16b) supplied with a connection cog (16c) and a bearing (16d) on the inside of the cover or coating.
- The inside of the extension (16a) and the second tubular part (12b) must at least be provided with a seal (16e) and, if specified, with at least a seal (15b) within the small pipe (15) and the extension (16a) of the water distribution pipe (16).

3. Compound device for taps according to claim 2. characterized in that:
- The basis disk (17) is provided with cog tangs (17a) which is inserted into the inner slot of the cover or coating (12) with a click, at a height which must be inferior to that of the positioning level of the small tap (15).
- A blocking ring (21) is positioned below the disk with fins (21a) passing through the disk (17), so that they block the cog tangs (17a) against the inner surface of the cover or coating (12).
- The disk (17) and the equipment chosen for fixing the tap are at least provided with one seal (26).
